# FASCICULE DE BREVET EUROPEEN

(11) **EP 0 502 773 B1**
(45) Date de publication et mention de la délivrance du brevet: **02.05.1997**
(21) Numéro de dépôt: 92400533.3
(22) Date de dépôt: 02.03.1992
(51) Int. Cl.: B66B 13/14

(54) **Dispositif de contrôle de moteur, notamment pour l'entraînement de portes d'ascenseur**
Steuerungsanordnung für einen Motor, insbesondere für den Antrieb von Aufzugstüren
Motor control device, in particular for driving elevator doors

(30) Priorité: 07.03.1991 FR 9102738
(43) Date de publication de la demande: 09.09.1992
(73) Titulaire: OTIS ELEVATOR COMPANY, Farmington, CT 06032 (US)
(72) Inventeur: Verillon, Alain, F-93420 Villepinte (FR); Cavallo, Jean-Louis, F-95100 Argenteuil (FR)
(74) Mandataire: Jolly, Jean-Pierre

(56) Documents cités:
- EP-A- 0 031 721
- WO-A-86/03249
- FR-A- 2 513 689
- GB-A- 1 160 312
- US-A- 4 529 920

## Description

L'invention concerne un système d'entraînement de porte d'ascenseur avec un dispositif de contrôle de moteur et en particulier un système d'entraînement pourvu d'un dispositif de contrôle de moteur entièrement autonome et qui n'est pas dépendant d'éléments interrupteurs liés au mouvement des portes.

Les contrôles de portes d'ascenseurs actuels sont effectués essentiellement à l'aide d'interrupteurs de ralentissement, de fin de course, de matériel annexe de pilotage moteur montés dans l'environnement proche du dispositif (resistances statoriques, diodes...) et de relais d'alimentation dans chaque sens du moteur d'entraînement de la porte.

De tels dispositifs sont encombrants, tant par la présence des interrupteurs que par leur câblage. Ils sont par ailleurs assez onéreux à mettre en place et leur fonctionnement, lié à celui des contacts, est sujet à des pannes.

On connaît par le document FR-A-2 513 689 un système d'entraînement pour porte d'ascenseur comportant un dispositif de contrôle de moteur conforme à la partie préambule de la revendication 1. Ce système traite des signaux impulsionnels à une seule voie, émis sous forme sinusoïdale par le tachymètre capteur de déplacement de la porte. Le sens de déplacement du mobile est connu par la polarité du signal impulsionnel émis selon le sens de rotation du tachymètre (dynamo). Un tel encodeur nécessite la remise en forme du signal alternatif issu du tachymètre avant le traitement numérique ultérieur du signal. En outre, un encodeur tachymétrique comporte une difficulté de mise en oeuvre : il est en effet nécessaire d'établir une parfaite concentricité entre l'arbre de prise de mouvement et celui du tachymètre, avec la difficulté de fixation correspondante des éléments, l'encombrement résultant et le bruit de l'entraînement tachymétrique (bruit de dynamo). Par ailleurs, le traitement de signal n'intègre pas une fonction de détection de surintensité moteur par exemple au blocage de la porte pour l'inversion du déplacement.

On connaît encore par US-A-4 529 920 un encodeur à deux canaux, comportant deux capteurs de prise de mouvement dont l'un disposé légèrement avant l'autre renseigne du sens de rotation de l'encodeur et détermine par conséquent le sens de déplacement du mobile. Ce type d'encodeur est complexe et onéreux.

L'invention vise à remédier à ces inconvénients par un système d' entraînement de porte d'ascenseur conforme à la revendication 1.

Ainsi l'encodeur selon l'invention ne nécessite qu'un seul et simple capteur de prise de mouvement sur l'arbre source de mouvement qui n'est tenu qu'à délivrer une impulsion simple fonction d'un pas de déplacement du mobile et sans information de sens du mobile. Le traitement logique ultérieur de gestion du comptage et décomptage des impulsions est obtenu par l'unité de traitement qui en fonction d'une commande de sens d'entraînement de la porte, en dépendance avec un contrôle de sécurité d'intensité moteur et un contrôle de l'évolution du comptage, détermine une exploitation du capteur dans le sens d'une incrémentation ou d'une décrémentation du comptage et fait intervenir une réouverture de la porte sur un obstacle pendant toute la course de fermeture.

Lesdits moyens capteurs à signaux impulsionnels consistent avantageusement en une roue crantée montée pour tourner proportionnellement au mouvement de translation de la porte et dont la périphérie crantée est proche d'un bloc optique ou inductif à transistor à effet de champs, détectant le passage des divers crans de la roue. La porte est entraînée par l'intermédiaire d'un système à deux poulies et à courroie crantée orientée dans la direction de translation de la porte, la porte étant solidaire d'une patte d'actionnement elle même fixée rigidement à la courroie, et la roue crantée étant montée sur l'axe de l'une des deux poulies, à savoir l'axe de la poulie du moteur ou l'axe de la poulie menée.

Les moyens d'alimentation du moteur consistent en un ensemble de triacs ou groupes de triacs de fonction déterminée et qui sont commutés en fonction du besoin sous la commande du microprocesseur. Cet ensemble comporte des triacs d'alimentation de sens du moteur agissant sur l'inversion des phases du courant du moteur, des triacs de sélection de couple moteur agissant sur la tension délivrée au moteur et des triacs de freinage du moteur l'amenant à fonctionner en générateur.

L'ensemble du dispositif est alimenté par le réseau électrique. Le réseau monophasé 220 Volts est largement suffisant pour alimenter les circuits de logique et de puissance du système, les moteurs électriques d'entraînement utilisés pour ce type d'application étant de faible puissance.

L'ensemble des composants du dispositif est monté sur une seule carte de circuit imprimé, d'où un faible encombrement et la programmation des données de référence de la translation de la porte s'effectue de façon semi-automatique et sans compétence particulière à l'aide d'un bouton poussoir monté sur ladite carte.

Ladite unité de traitement ou microprocesseur fait intervenir dans le déroulement du mouvement quatre points de référence sur la course de translation à la fermeture de la porte, respectivement un point origine qui correspond à l'ouverture complète de la porte, un deuxième point proche du précédent dans l'intervalle desquels le mouvement de la porte s'effectue à couple d'entraînement réduit, un troisième point proche d'un quatrième point ou point de fermeture complète dans l'intervalle desquels la translation s'effectue également à couple réduit, la porte étant entraînée à couple maximal entre lesdits deuxième et troisième point, à savoir sur la majeure partie de sa course. En outre, ladite unité de traitement, en fonction d'une commande de sens d'entraînement en dépendance avec un contrôle de sécurité d'intensité moteur et un contrôle de l'évolution du comptage détermine une exploitation du capteur dans le sens d'une incrémentation ou d'une décrémentation du comptage.

D'autres aspects et avantages de l'invention seront apparents à la lecture de la description ci-après d'un exemple de réalisation non limitatif et en référence aux dessins annexés sur lesquels :
La figure 1 est une vue partielle en élévation du système d'entraînement d'une porte d'ascenseur selon l'invention montrant le capteur à signaux impulsionnels du dispositif de contrôle moteur,
La figure 2 est une vue schématique du circuit électronique du dispositif de contrôle de moteur selon l'invention, et
la figure 3 est un diagramme représentant les différentes étapes de fonctionnement de ce dispositif.

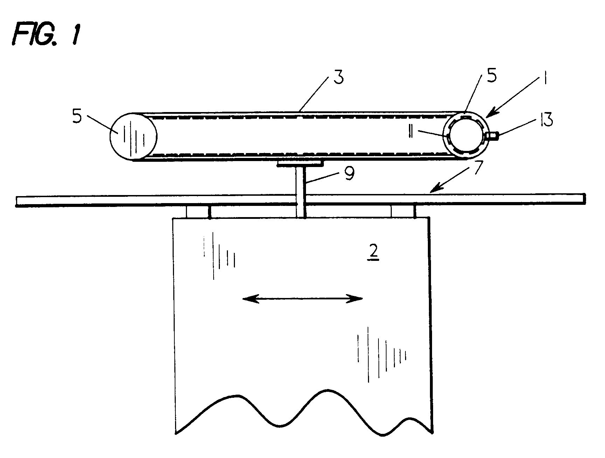

Comme représenté sur la figure 1, le système d'entraînement selon l'invention comporte un dispositif de contrôle de moteur qui utilise un capteur de mouvement rotatif 1 monté sur l'axe de moteur du système d'entraînement de la porte 2. Ce système d'entraînement comprend un ensemble d'une courroie crantée 3 montée sur deux poulies 5 disposées sensiblement aux extrémités de la course de translation de la porte, et un moteur d'entraînement correspondant actionnant la poulie motrice. La porte est entrainée en translation sur ses guides 7 à l'aide d'une patte d'actionnement 9 rigidement fixée à la courroie. Le capteur consiste en l'ensemble d'une roue crantée métallique 11 et d'une bloc inductif 13 à transistor à effet de champ disposé à faible distance de la périphérie crantée de la roue. Cette roue crantée est montée sur l'axe et parallèlement à la poulie motrice 5. Le crantage est régulier de sorte que chaque impulsion délivrée au passage de chaque cran par le bloc inductif, lors de la rotation, corresponde à un mouvement de translation de la porte de longueur déterminée. Le comptage des impulsions en incrémentation ou décrémentation selon le sens de mouvement permet ainsi de déterminer la course de translation de la porte à partir d'un point de référence et de connaître sa position exacte à tout instant.

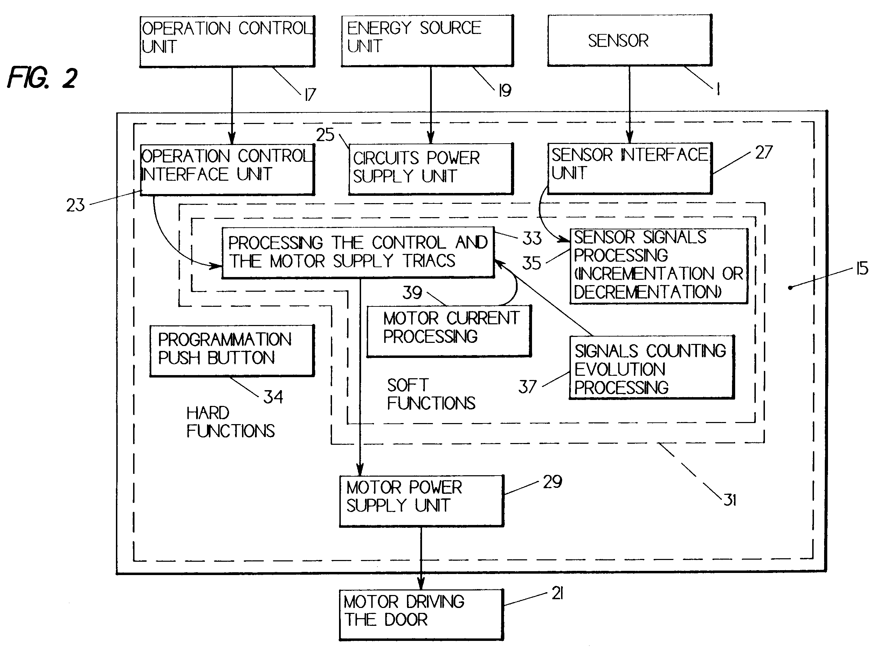

La figure 2 représente le circuit électronique du dispositif de contrôle selon l'invention. Celui-ci a été représenté par groupes fonctionnels ou blocs fonctionnels (encadrés) de composants constitutifs. Tous ces éléments sont assemblés en statique sur une carte 15 de type circuit imprimé classique. Les diverses relations des éléments entre eux ont été matérialisées par des flêches. Les éléments externes ou périphériques fonctionnels consistent respectivement en une unité de commande de fonctionnement 17, constituée par la platine de commande d'ouverture-fermeture de porte de la cabine, en une unité de source d'énergie 19 constituée par le réseau de tension 220 Volts monophasé, ledit capteur inductif 1 à roue crantée tel que représenté sur la figure 1 et le moteur d'entraînement 21 de la porte.

En ce qui concerne les constituants spécifiquement matériels du circuit effectuant des fonctions dites "HARD", on trouve successivement une unité d'interface de la commande de fonctionnement 23 associée à l'unité de commande 17, une unité d'alimentation adaptée 25 spécifique des circuits, associée au réseau et constituée, par exemple, par un transformateur, une unité d'interface 27 de lecture des signaux du capteur et une unité d'alimentation du moteur 29. L'interface de commande 17 est de type multitension fonctionnant sans ajustement avec des signaux d'entrée de 18 à 220 Volts continu ou alternatif. Elle délivre en sortie un signal en créneau de 5 Volts continu ou nul. Le transformateur non représenté de l'unité 25 permet essentiellement d'abaisser la tension d'alimentation du réseau à une valeur inférieure compatible à celle des éléments du circuit. L'interface de lecture du capteur 27 délivre un signal digitalisé sous forme de 0 ou 1 logiques. L'unité d'alimentation du moteur 29 consiste en un ensemble de triacs spécifiques, respectivement agissant sur le sens de marche du moteur, son couple d'entraînement en fonction de la course de translation de la porte, et le freinage du moteur commuté en générateur. Les triacs de sens sont associés à un condensateur de déphasage classique créant à partir du courant monophasé du réseau le champs d'induction tournant nécessaire au fonctionnement du moteur. L'inversion de sens est obtenue en jouant sur l'inversion des phases du moteur. Les triacs de couple jouent sur la tension d'alimentation du moteur. Les triacs de freinage font travailler le moteur en générateur avec autofreinage par le courant produit.

Lesdites unités de périphériques fonctionnels sont reliées à une unité principale de traitement 31 exécutant plus particulièrement les fonctions dites "SOFT". Celle-ci est encadrée par un trait interrompu en position centrale sur la carte. Cette unité consiste en un microprocesseur convenablement adapté ou programmé pour exécuter les diverses fonctions usitées telles que celle du traitement de la commande et des triacs d'alimentation du moteur 33, celle de gestion des signaux du capteur 35 associée à une fonction de traitement de l'évolution du comptage de ces signaux 37 et enfin celle de traitement de l'intensité du moteur 39. Toutes ces fonctions sont interdépendantes et seront explicitées dans la suite. En premier lieu, on trouve la fonction de traitement de la commande 33 qui agit sur l'initialisation logique et physique du dispositif déclenchant le pilotage des triacs en fonction de l'information reçue des autres fonctions. Au préalable, la fonction 35 de gestion des signaux du capteur assure le comptage des signaux d'impulsions émanant du capteur et délivre une information d'incrémentation ou de décrémentation correspondant au sens de translation de la porte. Ce comptage des impulsions est effectué à partir d'une référence choisie (position origine) et permet de déterminer à tout instant la position du mobile (de la porte). Cette fonction est directement associée à la fonction 37 de traitement de l'évolution du compteur qui agit en sorte que les étapes de mouvement se déroulent selon l'ordre programmé en fonction de la course (variation de couple, freinage et couple réduit explicité dans la suite) et de surveiller dans le temps le bon déroulement des étapes du mouvement. Enfin, la fonction 39 de traitement de l'intensité moteur ou de sécurité, fonctionnant par détection d'un seuil maximal d'intensité, permet de détecter tout blocage de la porte et agit sur la fonction de traitement de l'alimentation 33 pour que la porte soit entrainée en sens inverse. On notera que la programmation du microprocesseur pour exécuter lesdites fonctions est effectuée de façon semi-automatique par un bouton poussoir 34 monté sur la carte et dont la seule pression manuelle permet d'enregistrer les divers points de référence de la course de la porte à savoir le point d'origine ou point de départ qui est choisi à l'ouverture complète, le point d'entrée en couple maximal (deuxième point de référence), le point de freinage (troisième point) et le point de fin de course de la porte (quatrième point).

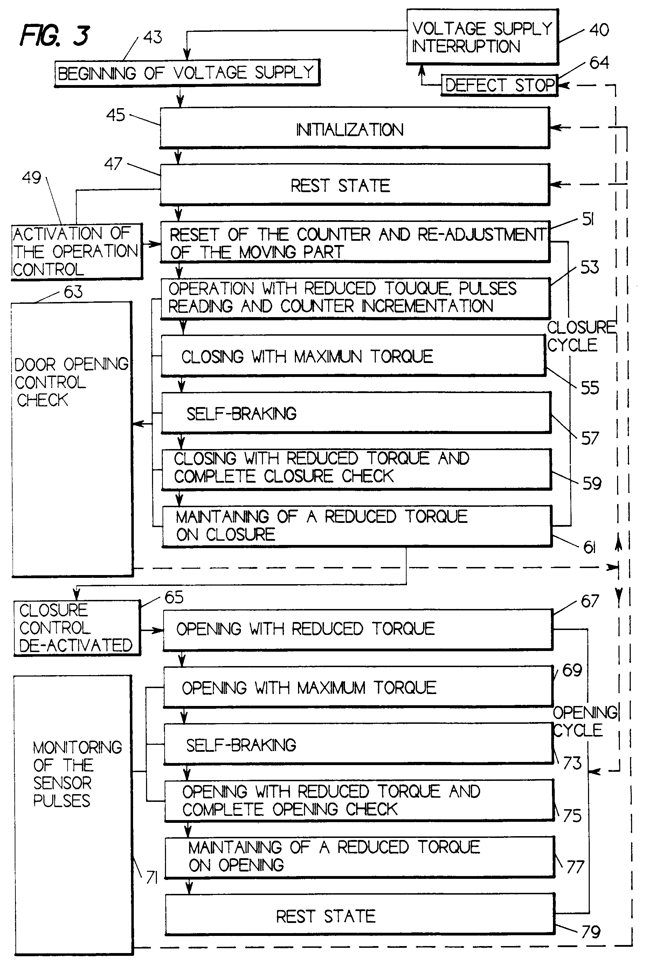

Le fonctionnement du dispositif en relation avec la translation de la porte a été résumé ci-dessous en référence au diagramme de la figure 3.

La progression du déroulement des différentes étapes est indiqué par les flèches. Partant d'un état d'interruption général de la tension d'alimentation 40 où le fonctionnement ne peut être réalisé, le cycle commence par la mise en tension du dispositif par le réseau, en 43 d'alimentation.La porte étant supposée ouverte au repos, l'initialisation du cycle en 45 conduit à un retour automatique à l'état de repos 47 où la porte demeure dans cette position. Supposons qu'à ce stade, un utilisateur veuille utiliser l'ascenseur. Cet utilisateur va donc émettre un ordre d'activation de la commande de fonctionnement 49. Ceci se traduit par un recalage automatique et logique du mobile en 51, à savoir une reprise de l'ouverture et simultanément une mise à zéro du compteur.

A partir de cette position origine de la porte, la translation de cette dernière peut être démarrée. La mise en marche en 53 vers la fermeture s'effectue d'abord à couple réduit. Les impulsions du capteur sont lues et incrémentent le compteur par l'intermédiaire du microprocesseur. L'entraînement à couple réduit est effectué jusqu'au deuxième point de référence de la course précédemment défini (à faible distance du point origine). A ce point, en 55 l'entraînement s'effectue à couple maximal et donc à vitesse la plus élevée. La lecture des impulsions est maintenue, ce qui permet de connaître à tout instant la position exacte de la porte, laquelle peut en cas d'anomalie, blocage ou panne, détecté par contrôle de la perte de l'existence des impulsions, revenir à sa position de repos par translation inverse de cette mime longueur parcourue. Dans ce parcours à couple maximal, l'intensité de courant du moteur est contrôlée en référence à un seuil donné de façon à détecter toute situation de blocage de la porte. Ce contrôle est effectué par'la fonction de traitement de l'intensité moteur. Le parcours s'effectue à couple maximal et donc à vitesse la plus élevée sur la majeure partie de la course de translation. Lorsqu'on arrive à une position proche de la fermeture (troisième point de référence), le moteur est commuté en générateur, en 57 (autofreinage), ce qui permet de freiner la porte jusqu'à une vitesse nulle où elle est pratiquement fermée compte tenu de son inertie puis le moteur est activé à couple réduit en 59 pour compléter éventuellement la fermeture et maintenir la porte dans cette position, en 61. Si durant la période à couple réduit un arrêt est observé avant la fin de course (cas de coincement de doigts par exemple) la porte est automatiquement rappelée en ouverture. Le maintien à la fermeture est donc effectué sous contrôle de la position exacte d'obtention de la fermeture correspondant au quatrième et dernier point de référence de la course de translation de la porte. Le couple réduit en fermeture empêche ainsi toute vibration de forte amplitude de la porte pendant le déplacement de la cabine.

On notera de plus que toutes les phases actives de ce cycle de fermeture sont sous la dépendance selon 63 du contrôle de commande d'ouverture de porte par un bouton poussoir classique à l'intérieur de la cabine, du contrôle des impulsions comme déjà précité, détectant toute anomalie et enfin du contrôle de l'intensité moteur, lesquels commandent l'inversion de sens avec référence à la position physique et logique de la porte. Ceci peut conduire selon le cas à un freinage préalable de la porte et éventuellement selon la gravité à un arrêt défaut en 64 et dans ce cas une coupure de l'alimentation puis son rétablissement seront nécessaires pour initialiser un nouveau cycle.

Le cycle d'ouverture de la porte est réalisé de façon symétrique à celui de la fermeture.

Lorsque la cabine arrive au niveau d'étage commandé par l'utilisateur, la commande de fermeture est désactivée, selon 65, ce qui enclenche le cycle d'ouverture de porte. Celle-ci commence à couple réduit en 67. La lecture des impulsions du capteur est maintenue tandis qu'à ce moment le compteur effectue une décrémentation. Au troisième point de référence précité, en 69, l'entraînement est effectué à couple maximal. On notera à ce sujet que toutes les commutations des triacs s'effectuent au point zéro des alternances évitant ainsi la production de parasites électriques. Pendant cette phase de défilement à vitesse la plus élevée de la porte, un contrôle des impulsions est effectué, en 71, comme dans la période correspondante de la fermeture. Au second point de référence proche de l'ouverture complète, le moteur est autofreiné en 73 de la mime façon qu'à l'approche de la fermeture, puis on passe à l'ouverture à couple réduit en 75 jusqu'à ouverture totale, ceci pendant un certain temps selon 77 avec contrôle de l'évolution du compteur. Dans la période de couple réduit en fin d'ouverture, le constat de non évolution du compteur entraîne le passage immédiat en situation de repos, comme précité. On atteint normalement le point d'ouverture complète (point d'origine). Enfin le couple est annulé, correspondant à l'état de repos en 79 duquel repartira un nouveau cycle de fermeture. On notera que dans un cycle d'ouverture, la période de passage au couple maximal (troisième point de référence) au point origine s'effectue sous la dépendance du contrôle des impulsions et du bon déroulement des étapes dans le temps, ce qui conduit en cas d'anomalie au passage direct à l'initialisation ou à l'état de repos.

Ce qui précède montre bien les caractéristiques avantageuses du dispositif de contrôle moteur selon l'invention quant à sa fiabilité (absence de contacts interrupteurs), sa facilité d'exécution et de mise en place (faible encombrement), son faible coût (utilisation d'éléments peu coûteux et faciles à régler par programmation semi-automatique par poussoir des points de référence de la course), sur la sécurité du mouvement qui peut être contrôlé pratiquement sur toute la course et indépendamment de l'intensité moteur, sur le freinage de la porte sans accessoire auxiliaire, sur le maintien automatique d'un couple réduit formant joint d'amortissement en fin de cycle et sur la possibilité d'application à tous types de moteurs avec l'adaptation correspondante en puissance des composants.

## Revendications

1. Système d'entraînement des portes de cabines d'ascenseur, par exemple d'une porte coulissante (2) d'une cabine d'ascenseur, pourvu d'un dispositif de contrôle de moteur, du type comportant des moyens capteurs (1) fournissant des signaux impulsionnels en nombre proportionnel au déplacement de la porte, en fonction d'un pas de déplacement donné de cette dernière, des moyens d'interface (27) recevant lesdits signaux impulsionnels pour les transformer en une information digitalisée, des moyens de commande émettant des signaux de commande d'ouverture et de fermeture de la porte et des moyens d'interface (23) de réception des signaux de commande d'ouverture et fermeture de la porte délivrant un signal de tension en créneau par exemple à 0 ou 5 volts, des moyens de traitement de l'information (31) de type microprocesseur recevant lesdits signaux digitalisés et en créneau, respectivement du capteur (1) et de la commande d'actionnement, et des moyens d'alimentation du moteur (29) de type triacs pilotés en commutation selon des consignes de sens, force d'entraînement et sécurité de déplacement de la porte par lesdits moyens de traitement de l'information convenablement adaptés à cet effet, caractérisé en ce que lesdits signaux émis par les moyens capteurs sont des signaux impulsionnels simples sans information du sens de déplacement et les moyens de traitement de l'information de type microprocesseur (31) comportent une fonction (35) de gestion des signaux émis par le capteur, effectuant un comptage des impulsions avec incrémentation ou décrémentation selon le sens de mouvement de la porte à partir d'une référence de position origine, choisie par exemple à l'ouverture complète de la porte, une fonction (37) de traitement de l'évolution du comptage des impulsions reliée à la susdite fonction, et plus particulièrement chargée du déroulement du mouvement en fonction des antécédents, une fonction (33) de traitement des signaux de commande et de pilotage des triacs d'alimentation moteur, et une fonction (39) sécurité de traitement de l'intensité moteur détectant toute surintensité au moteur, dépendante par exemple du blocage de la porte, lesdites fonctions de traitement de l'intensité moteur et de traitement de l'évolution du compteur interagissant sur la fonction de traitement de la commande et de pilotage des triacs pour faire prendre en compte leur information dans la logique de déroulement du mouvement, en sorte que en fonction d'une commande de sens d'entraînement en dépendance avec un contrôle de sécurité d'intensité moteur et un contrôle de l'évolution du comptage, les moyens de traitement (31) déterminent un sens d'entraînement de la porte avec une exploitation correspondante du capteur, incrémentation ou décrémentation du comptage selon le sens de mouvement de la porte.

2. Système d'entraînement des portes de cabines d'ascenseur selon la revendication 1, caractérisé en ce que les moyens de traitement de l'information (31) font intervenir une réouverture de la porte sur un obstacle pendant toute la course de fermeture.

3. Système d'entraînement des portes de cabines d'ascenseur selon l'une des revendications précédentes, caractérisé en ce que lesdits moyens capteurs (1) à signaux impulsionnels consistent en une roue crantée (11) montée pour tourner proportionnellement au mouvement de translation de la porte et dont la périphérie crantée est disposée proche d'un bloc inductif (13) à transistor à effet de champs détectant par couplage inductif le passage des divers crans de la roue.

4. Système d'entraînement des portes de cabines d'ascenseur selon la revendication 3, caractérisé en ce que la porte est entraînée par l'intermédiaire d'un système à deux poulies (5) et à courroie crantée (3) orientée dans la direction de translation de la porte, la porte étant solidaire d'une patte d'actionnement (9) elle même fixée rigidement à la courroie, et la roue crantée étant montée sur l'axe de l'une des deux poulies, à savoir l'axe de la poulie du moteur ou l'axe de la poulie menée.

5. Système d'entraînement des portes de cabines d'ascenseur selon l'une des revendications précédentes, caractérisé en ce que les moyens d'alimentation du moteur (29) consistent en un ensemble de triacs ou groupes de triacs agissant sélectivement sur le sens d'entraînement de la porte par inversion des phases d'alimentation du moteur, le couple d'entraînement par variation de la tension d'alimentation du moteur et sur son autofreinage par commutation du moteur en générateur.

6. Système d'entraînement des portes de cabines d'ascenseur selon l'une des revendications précédentes, caractérisé en ce que les moyens de traitement de l'information (31) font intervenir dans le déroulement du mouvement quatre points de référence sur la course de translation à la fermeture de la porte, respectivement un point origine qui correspond à l'ouverture complète de la porte, un deuxième point proche du précédent, dans l'intervalle desquels le mouvement de la porte s'effectue à couple d'entraînement réduit, un troisième point proche d'un quatrième point ou point de fermeture complète, dans l'intervalle desquels la translation s'effectue également à couple réduit, la porte étant entraînée à couple maximal entre lesdits deuxième et troisième point, à savoir sur la majeure partie de sa course.

7. Système d'entraînement des portes de cabines d'ascenseur selon la revendication 6, caractérisé en ce que lesdits points de référence sont enregistrés par programmation semi-automatique à l'aide d'un bouton poussoir (34) sur la carte-support des composants.

8. Système d'entraînement des portes de cabines d'ascenseur selon l'une des revendications 6 ou 7, caractérisé en ce que les moyens de traitement de l'information (31) font intervenir une phase d'autofreinage de la porte réalisée par commande des triacs de freinage respectivement au troisième point de référence à la fermeture et au deuxième point à l'ouverture.

9. Système d'entraînement des portes de cabines d'ascenseur selon l'une des revendications précédentes, caractérisé en ce que les moyens de traitement de l'information (31) font intervenir le maintien d'un couple réduit permanent en fin de fermeture et au moins un certain temps en fin d'ouverture.

## Claims

1. System for driving lift car doors, for example a sliding door (2) of a lift car, provided with a motor control device, of the type comprising sensor means (1) supplying pulse signals in a number proportional to the movement of the door, as a function of a given speed of movement of the latter, interface means (27) receiving said pulse signals in order to convert them into digital information, control means emitting control signals for opening and closing the door and interface means (23) for receiving the control signals to open and close the door, delivering a gap voltage signal of for example 0 to 5 volts, data processing means (31) of the microprocessor type receiving said digitalized gap signals, from the sensor (1) and the actuating control, respectively, and means for supplying the motor (29) of the triac type switched in accordance with factors of direction, driving force and safety of movement of the door by said data processing means suitably adapted for this purpose, characterised in that the signals emitted by the sensor means are simple pulse signals with no data as to the direction of movement and the data processing means of the microprocessor type (31) comprise a function (35) for managing the signals emitted by the sensor, counting the pulses with an increase or decrease depending on the direction of movement of the door starting from an original reference position, selected for example when the door is fully open, a function (37) for processing the progress in counting the pulses connected to the above-mentioned function, and more particularly charged with the progress of the movement as a function of the foregoing, a function (33) for processing the command and control signals of the motor supply triacs, and a function (39) for the safe processing of the motor power, detecting any excessive working of the motor, caused for example by blocking of the door, said functions of processing the motor power and processing the progress of the counter interacting with the function of processing the command and control of the triacs in order to ensure that the data from them is taken into account in the logic of progression of the movement, so that, in accordance with a control of the direction of drive, depending on monitoring the safety of the motor power and monitoring the progress of the count, the processing means (31) determine a direction of driving the door with corresponding actuation of the sensor and an increase or decrease in the count depending on the direction of movement of the door.

2. Drive system for lift car doors according to claim 1, characterised in that the information processing means (31) causes the door to reopen in the presence of an obstacle throughout the closing operation.

3. Drive system for lift car doors according to one of the preceding claims, characterised in that the sensor means (1) with pulse signals consist of a notched wheel (11) mounted so as to rotate proportionally to the translational movement of the door, the notched rim being located close to an inductive block (13) with a field-effect transistor which detects, by inductive coupling, the passage of the various notches in the wheel.

4. Drive system for lift car doors according to claim 3, characterised in that the door is driven via a system comprising two pulleys (5) and a notched belt (3) oriented in the direction of translation of the door, the door being integrally attached to an actuating lug (9) which is in turn rigidly fixed to the belt, and the notched wheel being mounted on the spindle of the pulley of the motor or the spindle of the driven pulley.

5. Drive system for lift car doors according to one of the preceding claims, characterised in that the means for supplying the motor (29) consist of a set of triacs or groups of triacs acting selectively on the direction of driving of the door by inverting the supply phases of the motor, on the drive couple by varying the supply voltage of the motor, and on its automatic braking by switching the motor into generator mode.

6. Drive system for lift car doors according to one of the preceding claims, characterised in that the information processing means (31) interpolate into the progress of the movement four reference points relating to the translational movement during closure of the door, namely a starting point which corresponds to the door being fully open, a second point close to the preceding one, between which two points the movement of the door takes place with a reduced drive couple, a third point close to a fourth point or fully closed point, between which latter two points the translational movement also takes place with a reduced couple, the door being driven at maximum couple between said second and third points, namely over the majority of its travel.

7. Drive system for lift car doors according to claim 6, characterised in that said reference points are recorded by semi-automatic programming by means of a push-button (34) on the component support board.

8. Drive system for lift car doors according to one of claims 6 and 7, characterised in that the information processing means (31) interpolate a phase of automatic braking of the door, achieved by controlling the braking triacs, at the third reference point during closing and at the second reference point during opening.

9. Drive system for lift car doors according to one of the preceding claims, characterised in that the information processing means (31) ensure that a permanent reduced couple is maintained at the end of the closing operation and for at least a certain length of time at the end of the opening operation.

## Patentansprüche

1. Antriebssystem für Aufzugkabinentüren, z. B. für eine Schiebetür (2) einer Aufzugkabine, umfassend eine Motorsteuereinrichtung des Typs, der Sensormittel (1) aufweist, die Impulssignale in einer zu der Bewegung der Tür proportionalen Anzahl als Funktion eines Bewegungsschritts der Tür liefern, Schnittstellenmittel (27), die die Impulssignale empfangen und sie in digitalisierte Information umsetzen, Steuermittel, die Steuersignale zum Öffnen und zum Schließen der Tür abgeben, und Schnittstellenmittel (23) zum Empfangen von Steuersignalen zum Öffnen und Schließen der Tür und zum Abgeben eines Rechteckspannungssignals von z. B. 0 oder 5 Volt, Informationsversarbeitungsmittel (31) vom Mikroprozessortyp, die die digitalisierten Signale und die Rechtecksignale von dem Sensor (1) bzw. der Antriebssteuerung empfangen, und Motorspeisemittel (29) vom Typ mit Triacs, die gemäß Richtungsanweisungen kommutiert werden, wobei die Antriebskraft und Sicherheit der Türbewegung mit Hilfe dieser Informationsverarbeitungsmittel in geeigneter Weise zu diesem Zweck angepaßt sind, dadurch gekennzeichnet, daß die von den Sensormitteln abgegebenen Signale einfache Impulssignale ohne Richtungsinformation bezüglich der Bewegung sind, und die Informationsverarbeitungsmittel vom Mikroprozessortyp (31) eine Funktion (35) der Verarbeitung der von dem Sensor gelieferten Signale aufweist, um eine Zählung der Impulse mit Inkrementierung oder Dekrementierung entsprechend der Bewegungsrichtung der Tür ausgehend von einer Referenz-Ausgangsposition vorzunehmen, wobei letzere beispielsweise der vollständigen Türöffnung entspricht, eine Funktion (37) der Verarbeitung der Impulszählungsentwicklung aufweisen, die mit der vorerwähnten Funktion gekoppelt ist und die insbesondere mit dem Bewegungsablauf als Funktion der vorausgehenden Größen betraut ist, eine Funktion (33) der Verarbeitung der Signale für die Steuerung und das Zünden der Speisetriacs des Motors aufweisen, und eine Sicherheitsfünktion (39) zum Verarbeiten der Motorlast aufweisen, welche jegliche Überlastung des Motors feststellt, abhängig beispielsweise von einer Blockierung der Tür, wobei die erwähnten Funktionen der Verarbeitung der Motorlast und der Verarbeitung der Entwicklung des Zählvorgangs miteinander auf die Funktion der Verarbeitung der Steuerung und Zündung der Triacs einwirken, damit ihre Information bei der Logik des Bewegungsablaufs berücksichtigt wird, derart, daß als Funktion einer Richtungsanweisung für den Antrieb in Abhängigkeit von einer Sicherheitsüberwachung der Motorlast und einer Überwachung der Entwicklung des Zählerstands die Verarbeitungsmittel (31) eine Antriebsrichtung der Tür mit einer entsprechenden Auswertung des Sensors, des Inkrementierens oder Dekrementierens des Zählerstands gemäß der Bewegungsrichtung der Tür, bestimmen.

2. Antriebssystem für Aufzugkabinentüren nach Anspruch 1, dadurch gekennzeichnet, daß die Informationsverarbeitungsmittel (31) ein erneutes Öffnen der Tür bei einem Hindernis während des Schließvorgangs veranlassen.

3. Antriebssystem für Aufzugkabinentüren nach einem der vorhergehenden Ansprüche, dadurch gekennzeichnet, daß die Impulssignal-Sensormittel (1) umfassen: ein Zackenrad (11), welches so gelagert ist, daß es sich proportional zu der Translationsbewegung der Tür dreht, und dessen gezackter Umfang sich in der Nähe eines induktiven Elements (13) mit Feldeffekttransistor befindet, welches durch induktive Kopplung den Vorbeilauf der einzelnen Zacken des Rads nachweist.

4. Antriebssystem für Aufzugkabinentüren nach Anspruch 3, dadurch gekennzeichnet, daß die Tür von einem System mit zwei Riemerscheiben (5) und einem Zahnriemen (3), der in Translationsrichtung der Tür orientiert ist, angetrieben wird, wobei die Tür starr mit einer Antriebslasche (9) gekoppelt ist, die ihrerseits starr mit dem Riemen verbunden ist, und das Zackenrad auf der Achse der einen der beiden Riemenscheiben gelagert ist, nämlich auf der Achse der Riemenscheibe des Motors oder der Achse der mitgenommenen Riemenscheibe.

5. Antriebssystem für Aufzugkabinentüren nach einem der vorhergehenden Ansprüche, dadurch gekennzeichnet, daß die Motorspeisemittel (29) aus einer Anordnung von oder aus Gruppen von Triacs bestehen, die selektiv auf die Antriebsrichtung der Tür durch Umkehrung der Phasen der Motorspeisung, das Antriebsmoment durch Variieren der Speisespannung für den Motor und die Eigenbremsung durch Kommutieren des als Generator arbeitenden Motors einwirken.

6. Antriebssystem für Aufzugkabinentüren nach einem der vorhergehenden Ansprüche, dadurch gekennzeichnet, daß die Informationsverarbeitungsmittel (31) beim Bewegungsablauf vier Referenzpunkte in den Schließ-Translationshub der Tür einbringen, einen Ursprungspunkt, der der vollständig geöffneten Stellung der Tür entspricht, einen zweiten Punkt, der sich in der Nähe des vorausgehenden Punkts befindet, und in deren Intervall die Bewegung der Tür bei reduziertem Drehmoment stattfindet, einen dritten Punkt in der Nähe eines vierten oder der vollständigen Schließung entsprechenden Punkts, in deren Intervall die translatorische Bewegung ebenfalls bei reduziertem Drehmoment stattfindet, wobei die Tür zwischen dem zweiten und dem dritten Punkt, nämlich im Hauptabschnitt ihres Verlaufs, mit maximalem Drehmoment angetrieben wird.

7. Antriebssystem für Aufzugkabinentüren nach Anspruch 6, dadurch gekennzeichnet, daß die Referenzpunkte eingespeichert werden durch halbautomatische Programmierung mit Hilfe einer Drucktaste (34) auf der Trägerkarte der Bauelemente.

8. Antriebssystem für Aufzugkabinentüren nach einem der Ansprüche 6 bis 7, dadurch gekennzeichnet, daß die Informationsverarbeitungsmittel (31) eine Phase der Eigenbremsung der Tür bilden, realisiert durch eine Ansteuerung der Brems-Triacs an dem dritten Referenzpunkt beim Schließen und am zweiten Referenzpunkt beim Öffnen.

9. Antriebssystem für Aufzugkabinentüren nach einem der vorhergehenden Ansprüche, dadurch gekennzeichnet, daß die Informationsverarbeitungsmittel (31) am Schluß des Schließvorgangs und zumindest eine gewisse Zeit am Schluß des Öffnungsvorgangs für eine Aufrechterhaltung eines verringerten Drehmoments sorgen.
